Europäisches Patentamt

European Patent Office

Office européen des brevets

(11) Veröffentlichungsnummer: **0 647 687 A1**

## (12) EUROPÄISCHE PATENTANMELDUNG

| | |
|---|---|
| (21) Anmeldenummer: **94114843.9** | (51) Int. Cl.⁶: **C09C 1/00**, H01B 1/08 |
| (22) Anmeldetag: **21.09.94** | |

(30) Priorität: **02.10.93 DE 4333673**

(43) Veröffentlichungstag der Anmeldung:
**12.04.95 Patentblatt 95/15**

(84) Benannte Vertragsstaaten:
**DE ES FR GB IT**

(71) Anmelder: **MERCK PATENT GmbH**
**Frankfurter Strasse 250**
**D-64293 Darmstadt (DE)**

(72) Erfinder: **Pfaff, Gerhard, Dr.**
**Trautenauer Strasse 41**
**D-64839 Münster (DE)**
Erfinder: **Bauer, Gerhard, Dr.**
**Barbarastrasse 12b**
**D-63801 Kleinostheim (DE)**

(54) **Substratfreie leitfähige Pigmente.**

㊷ Substratfreies, elektrisch leitfähiges Pigment enthaltend 90 bis 98 Gew.-% Zinnoxid und 1 bis 10 Gew.-% mindestens eines Dotierstoffes, bestehend aus einem Oxid eines Elementes der III., IV. oder V. Hauptgruppe des Periodischen Systems mit Ausnahme von Zinn, herstellbar durch inniges Vermischen von Zinndioxid mit mindestens einem Dotierstoff und Kalzinieren des erhaltenen Gemisches bei 800° bis 1000 ° C für 30 bis 120 min.

EP 0 647 687 A1

Die Erfindung betrifft elektrisch leitfähige, gelblich-weiße Pigmente.

In vielen Bereichen der Technik besteht ein Bedarf an leitfähigen Pigmenten, mit denen z.B. elektrisch leitfähige, antistatische oder elektromagnetische Wellen abschirmende Kunststoffe, Lacke, Beschichtungen oder Fasern hergestellt werden können. In großen Mengen wird dazu leitfähiger Ruß eingesetzt, der jedoch auf Grund seiner hohen Lichtabsorption im sichtbaren Spektralbereich nicht für transparente, helle oder farbige Beschichtungen eingesetzt werden kann. Ein weiteres Problem ist die starke Absorption von Ruß im IR-Bereich, was zum Beispiel bei Sonneneinstrahlung zu einer vielfach unerwünschten Erwärmung der beschichteten Gegenstände führt. Für helle Beschichtungen werden deshalb mit Nickel beschichteter Graphit, Metallplättchen und Mischoxide, wie zum Beispiel Antimon dotiertes Zinndioxid, verwendet. Die genannten Mischoxide können dabei auch auf Trägern, beispielsweise auf plättchenförmigem Glimmer oder kugelförmigem Bariumsulfat, aufgebracht sein.

In US 4 568 609 werden leitfähige plättchenförmige Pigmente beschrieben, bei denen ein plättchenförmiges Substrat mit einer leitfähigen Schicht aus mit Antimon dotiertem Zinnoxid überzogen ist.

Die leitfähige Schicht wird auf das Substrat aufgebracht, indem zu einer wäßrigen Suspension des Substrates Salze von Zinn und Antimon im vorbestimmten Mischungsverhältnis bei einem geeigneten pH-Wert so zudosiert werden, daß jeweils unmittelbar eine Hydrolyse und Abscheidung der Hydroxide oder Oxidhydrate auf dem plättchenförmigen Substrat erfolgt. Nach Beendigung der Beschichtung wird das Pigment abgetrennt, gewaschen und getrocknet und bei 650 bis 850 °C kalziniert.

Die Herstellung eines substratfreien leitfähigen Pigmentes wird in EP-A-0 441 427 beschrieben. Dazu wird die alkoholische Lösung eines Zinnsalzes mit der wäßrigen Lösung eines Fluorids gemischt, das ausgefällte Zinnhydroxid abgetrennt, getrocknet und bei 500 °C kalziniert.

Neben der Herstellung leitfähiger Mischoxide auf naßchemischem Wege ist es auch möglich, elektrisch leitende Mischoxide auf trockenem Wege durch Hochtemperaturbehandlung herzustellen. US 4 655 966 beschreibt die Herstellung von Antimon dotiertem Zinnoxid durch inniges Mischen von Zinndioxid und Antimontrioxid im Verhältnis von 1,25 bis 10 Gewichtsteilen Antimonoxid zu 100 Gewichtsteilen Zinndioxid und Erhitzen des erhaltenen Gemisches auf 900° bis 950 °C.

Das nahezu weiße Pigment wird für elektrisch leitende weiße oder farbige Anstriche bei Flugzeugen eingesetzt, um die Akkumulation von statischer Elektrizität auf elektrisch nicht leitenden Teilen zu verhindern. Lacke mit dem leitfähigen Pigment können aber auch in der Elektronikindustrie eingesetzt werden.

Die EP-A-0 487 366 beschreibt antistatische und radiotransparente Coatings für Antennen von Weltraumsatelliten. Das hierfür verwendete Pigment besteht aus Zinndioxid und Titandioxid, die mit Antimon dotiert sind. Die Herstellung erfolgt durch inniges Vermischen von 30 bis 73 Teilen $SnO_2$, 70 bis 27 Teilen $TiO_2$ und 0,1 bis 10 Teilen $Sb_2O_3$ und Kalzinieren des Gemisches bei 700 bis 1000 °C für 5 bis 10 Stunden. Wahlweise kann dem Anstrichmittel ein nicht leitfähiges, weißes Pigment, zum Beispiel $TiO_2$, ZnO, $Zn_2TiO_4$, $ZnSnO_4$ oder $SnTiO_4$, zugesetzt werden, um den Weißgrad des Anstrichmittels zu verbessern.

Für den Oberflächenwiderstand der Beschichtung werden Werte zwischen 2-500 M $\Omega$ pro Flächeneinheit angegeben. Für antistatische Beschichtungen, für die man in der Regel einen Oberflächenwiderstand von weniger als 1 M$\Omega$ fordert, ist die Leitfähigkeit dieses Lackes zu gering.

Aufgabe der Erfindung ist es, die Palette an leitfähigen Pigmenten, die durch Hochtemperaturbehandlung von Oxidmischungen hergestellt werden können, zu erweitern und die Leitfähigkeit dieser Pigmente zu erhöhen.

Diese Aufgabe wird gemäß der vorliegenden Erfindung gelöst durch ein substratfreies, elektrisch leitfähiges Pigment, enthaltend 90 bis 98 Gew.-% Zinnoxid und 1 bis 10 Gew.-% mindestens eines Dotierstoffes, bestehend aus einem Oxid eines Elementes der III., IV. oder V. Hauptgruppe des Periodischen Systems mit Ausnahme von Zinn, herstellbar durch inniges Vermischen von Zinndioxid mit mindestens einem Dotierstoff und Kalzinieren des erhaltenen Gemisches bei 850 bis 950 °C für 30 bis 90 min.

Gegenstand der Erfindung sind auch Lacke, Druckfarben, Kunststoffe oder Coatings, welche mit dem erfindungsgemäßen Pigment pigmentiert sind.

Als Dotierstoffe für das Zinnoxid werden Oxide der Elemente der III., IV. oder V. Hauptgruppe des Periodischen Systems verwendet. Bevorzugt sind Oxide der Elemente Aluminium, Gallium, Indium, Silizium, Germanium und Antimon.

Die Oxide werden einzeln oder als Gemisch dem zu dotierenden Zinndioxid zugesetzt. Anstelle der Oxide können aber auch Salze der oben angegebenen Elemente, beispielsweise Carbonate oder Nitrate, als Ausgangsstoffe verwendet werden.

Die eingewogenen Pulver der Ausgangsstoffe werden nach bekannten Verfahren innig gemischt und bis zu einer Korngröße von 0,5 $\mu$m bis 10 $\mu$m in einer Kugelmühle oder anderen Intensivmühlen trocken oder naß gemahlen.

2

Das Mischungsverhältnis zwischen Zinndioxid und einem oder mehreren Dotierstoffen wird so bemessen, daß sich im Pigment ein Dotierstoffanteil in Form eines oder mehrerer Oxide von 1 bis 10 Gew.-% einstellt. Das eingesetzte Zinndioxid soll einen Gehalt von > 99 % $SnO_2$ aufweisen. Die Dotierstoffe sollen jeweils einen Anteil von > 99 % des entsprechenden Produktes enthalten.

Die Pulvermischung wird bei einer Temperatur von 800 bis 1000 °C, bevorzugt 850 bis 950 °C, geglüht. Die Glühzeit beträgt 30 bis 120 min, bevorzugt 60 bis 90 min. Das Glühen kann in üblichen Öfen, wie zum Beispiel in Stempel-, Kammer- oder Durchlauföfen erfolgen. Das Aufheizen der Reaktionsmischung kann so erfolgen, daß das Gemisch direkt in den auf die Reaktionstemperatur vorgeheizten statischen Ofen gebracht wird. Im Durchlaufofen kann das Aufheizen auf die Reaktionstemperatur zwischen 5 und 60 min, vorzugsweise zwischen 10 und 30 min, betragen. Bei einzelnen Dotierstoffen, beispielsweise Aluminiumoxid, ist ein Glühen unter Schutzgas erforderlich.

Die erfindungsgemäßen hergestellten Pigmente zeigen eine gelblich-weiße bis weiße Farbe. Der spezifische Widerstand liegt zwischen 50 und 200 Ω cm. Die Widerstandswerte sind auch über einen Zeitraum von mehr als 6 Monaten stabil.

Der spezifische Widerstand der Pigmente wurde nach folgender Methode bestimmt:

In einem Acrylglas-Rohr mit dem Durchmesser von 2 cm wird eine kleine Menge von etwa 0,5 g Pigment mit Hilfe eines Gewichts von 10 kg zwischen zwei Metallstempel zusammengepreßt. Von den so verpreßten Pigmenten wird der elektrische Widerstand R gemessen. Aus der Schichtdicke L des komprimierten Pigments ergibt sich der spezifische Widerstand $\rho$ nach der Beziehung

$$\rho = R \cdot \frac{\pi \cdot (d/2)^2}{L} \quad [Ohm \cdot cm]$$

Zur Messung des Widerstandes des pigmentierten Anwendungssystems, beispielsweise eines Lackes, werden 15 Gewichtsteile Pigment in 85 Gewichtsteilen Bindemittellösung (Acrylat-Melaminharz: 59.9g, Verdünner: 25,1 g) eingearbeitet. Von diesem Lack wird ein dünner Film auf ein Blech aufgebracht und der Oberflächenwiderstand nach DIN-Norm 53596 mit Hilfe einer Federzungenelektrode gemessen.

Der Oberflächenwiderstand der verschiedenen Lackproben liegt zwischen 15 und 130 k Ω. Diese Werte liegen damit um 1 bis 2 Zehnerpotenzen niedriger im Verhältnis zu dem in der EP-A-487 366 beanspruchten leitfähigen Anstrichmittel.

Die nachfolgenden Beispiele sollen die Erfindung erläutern, ohne sie zu begrenzen.

### Beispiel 1

Für die Herstellung eines leitfähigen Pigmentes gemäß der Erfindung wurden zunächst 97,1 g $SnO_2$, 1,9 g $Sb_2O_3$ und 1,0 g $SiO_2$ mit Partikelgrößen von 1 bis 20 $\mu$m eingewogen.

Die trockene Mischung der Oxide wurde nunmehr 30 min in einer Kugelmühle zerkleinert und homogenisiert. Anschließend wurde die Reaktionsmischung in einer Glühschale in den auf 950 °C aufgeheizten Ofen gegeben und 1 h bei dieser Temperatur an Luft zur Reaktion gebracht. Nach dieser Zeit wurde die Probe aus dem Ofen genommen. Die Abkühlung auf Raumtemperatur erfolgte an Luft.

### Beispiele 2-10

Die Beispiele 2-10 wurden in analoger Weise wie Beispiel 1 bei Variation der Ausgangsstoffe und ihrer Mischungsanteile sowie der Glühtemperatur und der Glühzeit gemäß Tabelle 1 ausgeführt.

## Tabelle 1

| Beispiel | g SnO$_2$ | g Sb$_2$O$_3$ | g TiO$_2$ | g Al$_2$O$_3$ | g SiO$_2$ | Glühtemp. (°C) | Glühzeit (h) | Glühatm. | Rsp ($\Omega$cm) |
|---|---|---|---|---|---|---|---|---|---|
| 2 | 96,2 | 1,9 | | | 1,9 | 950 | 1 | L | 88 |
| 3 | 94,3 | 1,9 | | | 3,8 | 950 | 1 | L | 110 |
| 4 | 94,3 | 3,8 | | | 1,9 | 950 | 1 | L | 126 |
| 5 | 96,2 | 1,9 | | 1,9 | | 950 | 1 | L | 150 |
| 6 | 93,5 | 4,7 | | 1,8 | | 950 | 1 | L | 160 |
| 7 | 94,3 | 1,9 | | 1,9 | 1,9 | 950 | 1 | L | 89 |
| 8 | 96,0 | 1,0 | 1,0 | 1,0 | 1,0 | 950 | 1 | L | 134 |
| 9 | 90,0 | | | 10,0 | | 900 | 1 | FG | 630 |
| 10 | 96,0 | | | 4,0 | | 900 | 1 | FG | 130 |

L = Luft, FG = Formiergas (95 % N$_2$, 5 % H$_2$). TiO$_2$ wurde nur in der Rutilmodifikation eingesetzt.

Die aus den Beispielen 2, 5, 7, 8 und 10 erhaltenen Pigmente wurden, wie oben beschrieben, in ein Acrylat-Melamin-Harz eingearbeitet und ein dünner Film auf ein Blech aufgebracht. Die erhaltenen Werte für den Oberflächenwiderstand sind in Tabelle 2 dargestellt.

Tabelle 2

| Beispiel | Oberflächenwiderstand des Lackes (k$\Omega$) |
|---|---|
| 2 | 15 |
| 5 | 130 |
| 7 | 15 |
| 8 | 100 |
| 10 | 120 |

## Patentansprüche

1. Substratfreies, elektrisch leitfähiges Pigment, enthaltend 90 bis 98 Gew.-% Zinnoxid und 1 bis 10 Gew.-% mindestens eines Dotierstoffes, bestehend aus einem Oxid eines Elementes der III., IV. oder V. Hauptgruppe des Periodischen Systems mit Ausnahme von Zinn, herstellbar durch inniges Vermischen von Zinndioxid mit mindestens einem Dotierstoff und Kalzinieren des erhaltenen Gemisches bei 800 bis 1000 °C für 30 bis 120 min.

2. Pigment nach Anspruch 1, dadurch gekennzeichnet, daß der Dotierstoff ein Oxid der Elemente Aluminium, Gallium, Indium, Silicium, Germanium oder Antimon ist.

3. Lacke, Druckfarben, Kunststoffe oder Coatings, welche mit einem Pigment nach den Ansprüchen 1 und 2 pigmentiert sind

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | EP-A-0 173 609 (CENTRE NATIONAL D'ÉTUDES SPATIALES) <br> * Seite 4, Zeile 16 - Zeile 17; Ansprüche 1,3 * | 1-3 | C09C1/00 <br> H01B1/08 |
| D | & US-A-4 655 966 (...) <br> --- | | |
| A | FR-A-1 221 750 (BAYER) <br> * Beispiel 132 * <br> --- | 1,2 | |
| A | EP-A-0 064 558 (MITSUBISHI) <br> * Ansprüche 1,5,7 * <br> --- | 1-3 | |
| A | DATABASE WPI <br> Week 8606, <br> Derwent Publications Ltd., London, GB; <br> AN 86-039602 <br> & JP-A-60 260 424 (MITSUBISHI METAL) 23. Dezember 1985 <br> * Zusammenfassung * <br> --- | 1,2 | |
| A | DATABASE WPI <br> Week 8643, <br> Derwent Publications Ltd., London, GB; <br> AN 86-281724 <br> & JP-A-61 205 622 (FUJI PHOTO FILM) 11. September 1986 <br> * Zusammenfassung * <br> ----- | | RECHERCHIERTE SACHGEBIETE (Int.Cl.6) <br><br> C09C <br> H01B |

Der vorliegende Recherchenbericht wurde für alle Patentansprüche erstellt

| Recherchenort | Abschlußdatum der Recherche | Prüfer |
|---|---|---|
| DEN HAAG | 1. Februar 1995 | Van Bellingen, I |